# FASCICULE DE BREVET EUROPEEN

(11) **EP 2 105 367 B1**
(45) Date de publication et mention de la délivrance du brevet: **01.08.2012**
(21) Numéro de dépôt: 09290131.3
(22) Date de dépôt: 24.02.2009
(51) Int. Cl.: B61B 12/06

(54) **Procédé de contrôle d'un organe de freinage ou de mise en mouvement auxiliaire d'une installation de transport par câble**
Verfahren zur Steuerung eines zusätzlichen Brems- oder Antriebsorgans einer Seilbahnanlage
Method for controlling an auxiliary unit for braking or moving a cable transport installation

(30) Priorité: 29.02.2008 FR 0851340
(43) Date de publication de la demande: 30.09.2009
(73) Titulaire: Pomagalski, 38340 Voreppe (FR)
(72) Inventeur: Michel, Daniel, 38120 Saint Egreve (FR); Huard, Jean-Paul, 74410 Saint Jorioz (FR); Tamisier, Franckie, 38330 Saint Nazaire les Eymes (FR)
(74) Mandataire: Novagraaf Technologies

(56) Documents cités:
- EP-A- 1 884 432
- FR-A- 2 122 809
- FR-A- 2 890 929

## Description

### DOMAINE TECHNIQUE DE L'INVENTION

L'invention concerne un procédé de contrôle d'au moins un organe de freinage ou de mise en mouvement auxiliaire d'une installation de transport par câble selon les caractéristiques du préambule de la revendication indépendante 1. Dans l'ensemble de la demande, le terme « contrôle » sera synonyme de diagnostic ou de vérification de l'état d'un système.

L'invention porte également sur un logiciel directement chargeable dans la mémoire d'un automate pour commander les étapes du procédé lorsque ledit logiciel est exécuté.

### ÉTAT DE LA TECHNIQUE

Pour des raisons de sécurité, les moyens de freinage et/ou les organes de mise en mouvement auxiliaire d'une installation de transport par câble doivent être contrôlés périodiquement. Afin d'effectuer ces tests dans des conditions les plus proches possible des conditions d'utilisations, le freinage est généralement testé lorsque l'installation est chargée.

Pour ce faire, il est connu d'équiper l'installation de transport avec des charges, installés dans chaque véhicule, avant d'effectuer les opérations de contrôle des moyens de freinage et/ou d'un organe de mise en mouvement auxiliaire. Ainsi, les charges permettent de simuler le fonctionnement normal d'une installation entraînée en charge. Toutefois, l'installation des lestes est une opération de simulation nécessitant de nombreuses opérations de manutention qui augmente le temps et les coûts du contrôle de l'installation.

Le document le plus pertinent FR 2 890 929, décrit un procédé de contrôle d'un organe de freinage ou de mise en mouvement auxiliaire pour une installation de transport à câble entraînant des véhicules ledit câble s'étendant en boucle fermée entre au moins deux poulies dont l'une au moins est motrice par des moyens d'entraînement comportant un moteur principal, ledit organe étant destiné à transmettre un couple à la poulie motrice, caractérisé en ce qu'il comprend les étapes successives suivantes: a) à partir d'un régime stabilisé de l'installation, on détermine une courbe représentative de la variation de vitesse des véhicules lorsque l'organe se trouve dans un état normal actif, les véhicules étant en charge et le moteur principal n'étant pas alimenté ; b) on détermine la valeur du couple instantané à transmettre à la poulie motrice pour reproduire au niveau de la poulie motrice les effets de l'inertie et/ou du couple résistant dus, pendant l'étape a), aux charges installées dans les véhicules ; c) à partir du même régime stabilisé de l'installation que pour l'étape a), on actionne l'organe vers son état actif pour réaliser son contrôle lorsque les véhicules sont à vide, et on pilote simultanément le moteur principal pour obtenir un couple égal à chaque instant à la valeur déterminée dans l'étape b).

Cedit procédé permet de remédier à ces inconvénients en disposant les charges réelles sur l'installation uniquement lors d'une première étape, et en simulant les effets des charges par l'application d'un couple instantané délivré par les moyens moteurs lors du test des organes de freinage ou de mise en mouvement auxiliaire.

Ce procédé de contrôle d'un organe de freinage ou de mise en mouvement auxiliaire prévoit les étapes suivantes :
a) à partir d'un régime stabilisé de l'installation, on détermine une courbe représentative de la variation de vitesse des véhicules lorsque l'organe se trouve dans un état actif, le moteur principal n'est pas alimenté et les véhicules sont lestés ;
b) on détermine la valeur du couple instantané à transmettre à la poulie motrice pour reproduire au niveau de la poulie motrice les effets de l'inertie et/ou du couple résistant dus, pendant l'étape a), aux charges installées dans les véhicules;
c) pour réaliser le contrôle de l'organe, on actionne l'organe vers son état actif, pour le même régime stabilisé de l'installation que pour l'étape a) lorsque les véhicules sont à vide, et on pilote simultanément le moteur principal pour obtenir un couple égale à chaque instant à la valeur déterminée dans l'étape b).

Ainsi, lors de l'étape c) qui est effectuée périodiquement afin de vérifier le fonctionnement de l'organe, on simule les effets de l'inertie et/ou du couple résistant dus aux charges.

Toutefois, ce procédé impose des essais avec un couple variable.

Ainsi, ce procédé nécessite de débrider le variateur du moteur principal afin que le moteur principal puisse produire le couple nécessaire lors de l'étape b) mentionnée ci-dessus. Or, dans certains cas, le couple produit par le moteur principal dépasse les limites normales d'utilisation, ce qui peut conduire à des détériorations du moteur et/ou du variateur.

En outre, ce procédé de contrôle ne prévoit pas de contrôler totalement certains organes de freinage, et notamment les organes de freinage commandés par une modulation de l'effort en fonction de la décélération de la ligne. En effet, dans le procédé de l'art antérieur, la modulation doit notamment être suspendue avant de tester l'organe, car la modulation permettrait de corriger un léger disfonctionnement de l'organe de freinage qui passerait alors inaperçu.

Par ailleurs, il est connu des unités de freinage d'une installation de disfonctionnement de l'organe de freinage qui passerait alors inaperçu.

Par ailleurs, il est connu des unités de freinage d'une installation de transport par câble comprenant deux freins et un système de commande transmettant :
- un premier signal de commande au premier frein, modulé pour asservir la vitesse du câble selon une première courbe de consigne de décélération ; et
- un second signal de commande au second frein, modulé pour asservir la vitesse du câble selon une deuxième courbe de décélération.

La valeur instantanée de la deuxième courbe est supérieure, à chaque instant, à la valeur de la première courbe de consigne. Ainsi, lors d'une défaillance du premier frein, le deuxième frein entre en action et compense alors le déficit en effort de freinage dû à la défaillance du premier organe, de sorte à limiter l'augmentation du temps de freinage.

Des unités de freinage de ce type sont notamment décrites dans le document EP 1 884 432.

Les procédés de contrôle de l'état de la technique ne permettent pas de tester de telles unités de freinage. En particulier, les procédés de l'art antérieur ne permettent pas de vérifier efficacement le déclenchement du second organe de freinage lorsque l'effort de freinage fourni par le premier organe n'est pas suffisant.

### OBJET DE L'INVENTION

L'invention vise à remédier à ces problèmes en proposant un procédé de contrôle d'un organe de freinage ou de mise en mouvement auxiliaire permettant de réaliser des tests périodiques complets, sans mettre en oeuvre des charges et ménageant l'installation mécanique.

L'invention vise, en outre, à proposer un procédé permettant de contrôler le fonctionnement d'une unité de freinage du type de celle mentionnée ci-dessus.

A cet effet, et selon un premier aspect, l'invention propose un procédé de contrôle d'un organe de freinage ou de mise en mouvement auxiliaire d'une installation de transport par câble entraînant au moins un véhicule, le câble étant entraîné par une poulie coopérant avec des moyens moteurs, le procédé de contrôle comportant au moins une phase de test dudit organe lors de laquelle, à partir d'un régime stabilisé de l'installation :
- on entraîne l'installation à vide par les moyens moteurs délivrant un couple C constant ;
- on active simultanément l'organe de freinage ou de mise en mouvement ; et on enregistre une courbe de vitesse V test.

Ainsi, le procédé selon l'invention ménage l'installation mécanique car le couple délivré par les moyens moteurs est un couple connu et limité

En outre, le procédé permet de tester divers types d'organes de freinage et cela, quels que soient leurs modes d'application : avec ou sans modulation, organe par organe, plusieurs organes simultanément, etc.

Le procédé permet également de tester une unité de freinage comprenant deux freins commandés respectivement par un premier signal modulé pour asservir la vitesse du câble selon une première courbe de consigne de décélération ; et par un second signal modulé pour asservir la vitesse du câble selon une deuxième courbe de décélération, la valeur instantanée de la deuxième courbe étant supérieure, à chaque instant, à la valeur de la première courbe de consigne. En effet, dans ce cas, l'application d'un couple constant bien choisi permet de vérifier le déclenchement de chacun des freins, en particulier le déclenchement du second frein, et le fonctionnement conjoint des deux freins.

Avantageusement, le procédé de contrôle comprend une phase préalable d'acquisition de données de référence, lors de laquelle :
- on règle l'organe ;
- à partir du régime stabilisé, on entraîne l'installation à vide par les moyens moteurs délivrant ledit couple C constant ;
- on active simultanément l'organe de freinage ou de mise en mouvement ;
- on enregistre au moins une courbe de vitesse V ref ; la phase de test comprenant une étape de comparaison des courbes de vitesse V test et V ref.

Ainsi, la courbe V test est comparée à une courbe de référence établie lorsque l'organe est dans un état réglé. Il est alors possible d'apprécier le réglage de l'organe testé.

Avantageusement, la phase préalable d'acquisition de données de référence comprend une étape de détermination du couple C, lors de laquelle :
- à partir du régime stabilisé, on active un organe de freinage sur l'installation munie de charges réelles entraînantes ou résistantes, les moyens moteurs étant arrêtés ;
- on mesure le temps d'arrêt Ta de l'installation ;
- on détermine le couple C constant délivré par les moyens moteurs principaux pour obtenir un temps d'arrêt Ta', lorsqu'on active l'organe sur l'installation à vide à partir d'un régime stabilisé, qui soit supérieur à Ta lorsque les charges réelles sont entraînantes et qui soit inférieure à Ta lorsque les charges sont résistantes.

Dès lors, le couple C constant délivré par les moyens moteurs produit un effet entraînant ou résistant supérieur aux effets de l'inertie et/ou du couple résistant dus aux charges réelles. Ainsi, si lors de l'application d'un couple produisant des effets supérieurs aux charges réelles, on observe un fonctionnement correct de l'organe testé, on peut a fortiori en déduire un fonctionnement correct de l'organe de freinage lorsque l'installation est munie de charges réelles.

Avantageusement, la phase préalable d'acquisition de données de référence comprend une étape de détermination du couple C, lors de laquelle :
- à partir du régime stabilisé, on active l'organe de mise en mouvement auxiliaire sur l'installation munie de charges réelles entraînantes ou résistantes, les moyens moteurs principaux étant arrêtés et a ligne étant vidée au fur et à mesure de l'avancé des véhicules ;
- on mesure la vitesse de l'installation à un instant t₁ et la vitesse de l'installation à un instant t₂ ;
- on détermine le couple C₁ constant délivré par les moyens moteurs principaux pour obtenir la vitesse de l'installation à l'instant t₁ lorsqu'on active l'organe de mise en mouvement auxiliaire sur l'installation à vide, à partir d'un régime stabilisé;
- on détermine le couple C₂ constant délivré par les moyens moteurs principaux pour obtenir la vitesse de l'installation à l'instant t₂, lorsqu'on active l'organe de mise en mouvement auxiliaire sur l'installation à vide, à partir d'un régime stabilisé.

Avantageusement, la phase de test de l'organe de mise en mouvement auxiliaire comprend au moins deux séquences lors desquelles les moyens moteurs principaux délivrent respectivement un couple C₁ constant puis un couple C₂ constant.

Avantageusement, le procédé comprend une opération de vérification de l'évolution des caractéristiques intrinsèques de l'installation comprenant :
- lors de phase préalable d'acquisition de données de référence, une étape d'enregistrement d'une courbe de vitesse Vo « inertie à vide » lors de laquelle, à partir d'un régime stabilisé, on débraye la poulie des moyens moteurs de l'installation fonctionnant à vide ; et
- lors de la phase de test, une étape d'enregistrement d'une courbe de vitesse V1 « inertie à vide », lors de laquelle, à partir du régime stabilisé, on débraye la poulie des moyens moteurs de l'installation fonctionnant à vide ; et une opération de comparaison des courbes Vo « inertie à vide » et V1 « inertie à vide ».

Ainsi, si cette opération démontre que les caractéristiques intrinsèques de l'installation n'ont pas évolué, on en déduit que les données acquises lors de la phase préalable d'acquisition de données de référence restent acceptables. Au contraire, si ces caractéristiques ont évolué de manière trop importante, l'installation doit être révisée et/ou la phase d'acquisition des données de référence doit être réitérée.

Avantageusement, le procédé comprend une étape de vérification des caractéristiques des moyens moteurs comprenant:
- lors de phase préalable d'acquisition de données de référence, une opération d'enregistrement d'une courbe de vitesse Vo « arrêt électrique » lors de laquelle, à partir d'un régime stabilisé de l'installation fonctionnant à vide, on alimente les moyens moteurs avec un variateur commandé par un signal de commande visant à faire varier la vitesse du moteur jusqu'à l'arrêt ; et
- lors de la phase de test, une opération d'enregistrement d'une courbe de vitesse V1 « arrêt électrique », lors de laquelle, à partir du régime stabilisé de l'installation fonctionnant à vide, on alimente les moyens moteurs avec un variateur commandé par le signal de commande visant à faire varier la vitesse du moteur jusqu'à l'arrêt ; et une opération de comparaison des courbes Vo « arrêt électrique » et V1 « arrêt électrique».

Cette étape permet de vérifier le bon fonctionnement du variateur et de s'assurer que ses caractéristiques n'ont pas subi de dérives au cours du temps.

Avantageusement, pendant la phase préalable d'acquisition de données de référence, on enregistre plusieurs courbes de vitesse V ref correspondant à un réglage de l'organe par défaut, par excès et conformément aux normes en vigueur.

Dès lors, on dispose de référence de « limites acceptables » de réglage des organes.

Avantageusement, le procédé comporte une phase de test lors de laquelle les moyens moteurs délivrent un couple C résistant constant et une phase de test lors de laquelle les moyens moteurs délivrent un couple C entraînant constant.

Selon un mode de réalisation, on contrôle un organe de freinage commandé par une modulation de l'effort en fonction de la décélération de la ligne ; le procédé comprenant une première phase de test lors de laquelle la modulation est suspendue et une seconde phase de test lors de laquelle l'organe de freinage est commandé par une modulation de l'effort. Ainsi, il est possible de déterminer à la fois et indépendamment le réglage des caractéristiques intrinsèques du frein et de sa modulation.

Dans un mode de réalisation de l'invention, le procédé comprend une phase de contrôle de la pression de glissement d'un organe de freinage comprenant les opérations suivantes :
- à partir du régime d'arrêt de l'installation, on entraîne l'installation à vide par les moyens moteurs principaux délivrant un couple C constant ;
- on fait varier la pression dans l'organe de freinage ; et
- on mesure la pression P test dans l'organe de freinage lorsque l'installation dépasse une vitesse seuil V « seuil ».

Ainsi, le procédé permet de disposer de données supplémentaires permettant de faciliter le diagnostic de l'organe testé et notamment de déterminer que le frein applique bien l'effort de freinage, et que le coefficient de frottement entre le frein et la poulie est dans les conditions standards.

Bien sûr, avantageusement, dans ce mode de réalisation, lors de la phase préalable d'acquisition de données de référence, on peut réaliser les opérations suivantes :
- à partir du régime d'arrêt de l'installation, on entraîne l'installation à vide par les moyens moteurs principaux délivrant un couple C constant ;
- on fait varier la pression dans l'organe de freinage ; et
- on mesure la pression P ref dans l'organe de freinage lorsque l'installation dépasse une vitesse seuil V « seuil » ; et
- lors de la phase de test, on compare les pressions P ref et P test.

Ainsi, la pression P ref est comparée à une pression de référence établie lorsque l'organe est dans un état réglé.

Avantageusement, lors des phases de test et d'acquisition de données de référence, on synchronise la position des véhicules entraînés par le câble lorsque l'on déclenche l'activation de l'organe. Dans un mode de réalisation de l'invention, on synchronise la position des véhicules entraînés au moyen d'un avertisseur sonore de passage des véhicules, qui permet de lancer la phase de test pour une même position des véhicules.

Selon un deuxième aspect, l'invention concerne un logiciel directement chargeable dans la mémoire d'un automate pour commander les étapes du procédé selon le premier aspect de l'invention, lorsque ledit logiciel est exécuté.

On comprend donc que le procédé selon l'invention ne se contente pas de vérifier le fonctionnement global de l'organe mais permet en outre de vérifier l'acceptabilité, élément par élément, de l'organe. Ainsi, si l'on observe une différence par rapport aux données de référence, on peut déterminer l'élément de l'organe qui pose problème et agir directement sur celui-ci pour régler l'organe. Un nouvel essai après réglage permet de valider l'action de correction réalisée auprès de l'élément défectueux.

### BRÈVE DESCRIPTION DES FIGURES

D'autres objets et avantages de l'invention apparaîtront au cours de la description qui suit, faite en référence aux dessins annexés, dans lesquels :
- la figure 1 est un graphique représentant les courbes de vitesse en fonction du temps : V « charges entraînantes », V test et V ref pour le contrôle d'un organe de freinage ; et
- la figure 2 est un graphique représentant les courbes de vitesse en fonction du temps : V « charges résistantes », V test et V ref pour le contrôle d'un organe de mise en mouvement auxiliaire.

### EXEMPLE DE RÉALISATION

Une installation de transport par câble est généralement composée d'au moins deux gares entre lesquelles au moins un câble de transport mobile forme une boucle afin de transporter un ou plusieurs véhicules d'une gare à une autre.

Bien évidemment, pour la suite de la description, on entend par véhicule, tout moyen de transport par câble tel que les télésièges, les télécabines, les téléphériques, les funiculaires, etc.

Le cas échéant, le ou les véhicules peuvent êtres suspendus au câble mobile qui assure leur entraînement. Alternativement, comme il est d'usage pour les installations de grande capacité, les véhicules peuvent être suspendus à des câbles fixes par l'intermédiaire d'un balancier à galets, et entraînés le long des câbles fixes par le câble de transport mobile.

Afin de transporter les véhicules, le câble est entraîné par une poulie motrice coopérant avec des moyens moteurs au moyen d'un dispositif débrayable de transmission du mouvement. Les moyens moteurs sont, par exemple, composés d'un ou de plusieurs moteurs électriques principaux.

L'installation comprend également un moteur de secours prenant le relais des moteurs principaux en cas de défaillance de ceux-ci.

Par ailleurs, l'installation est équipée d'un ou de plusieurs freins de service et d'un ou plusieurs freins d'urgence. Généralement, le ou les freins de services agissent sur l'arbre de sortie du moteur principal ou sur l'arbre de transmission du dispositif de transmission du mouvement. Les freins d'urgence, permettant de pallier une défaillance des moyens d'entraînement du câble, agissent généralement, directement sur les flancs de la poulie motrice.

Les freins d'urgence et de service sont destinés à transmettre directement ou indirectement un couple à la poulie motrice. L'ouverture des freins est actionnée par des moyens hydrauliques ou pneumatiques tels que des vérins, alors que des moyens de rappel mécaniques tels que des ressorts, permettent de rappeler les moyens de freinage vers leur position fermée de freinage. Les moyens hydraulique ou pneumatiques sont, pour certains freins de service et/ou d'urgence, commandés par un dispositif de modulation de l'effort de freinage en fonction de la décélération de la ligne.

Avantageusement, l'installation est munie de capteurs de pression permettant de mesurer la pression dans les organes de freinage et de moyens permettant d'enregistrer les informations provenant du capteur.

Afin de tester individuellement chaque organe de freinage, l'installation est équipé d'une unité de commande des organes de freinage permettant d'inhiber sélectivement les- organes de freinage par des moyens électrique ou mécanique et/ou d'inhiber la modulation d'un ou de plusieurs organes de freinage.

Dans un mode de réalisation, l'installation pourra être équipée d'une unité de freinage, du type de celle décrite dans le document EP 1 884 432, comprenant deux freins commandés respectivement par un premier signal de commande pour asservir la vitesse du câble selon une première courbe de décélération et par un second signal de commande pour asservir la vitesse du câble selon une deuxième courbe de décélération, supérieure, à chaque instant, à la valeur de la première courbe. Ainsi, en cas de défaillance du premier frein, le second frein se déclenche et la vitesse du câble est asservie selon la seconde courbe.

Par ailleurs, un variateur de vitesse alimente le moteur électrique principal de façon à pouvoir faire varier sa vitesse de l'arrêt jusqu'à sa vitesse nominale. Pour arrêter l'installation, il est possible de piloter le variateur de manière à commander une décélération du câble. Cet arrêt, nommé arrêt électrique, est par exemple, réalisé en baissant progressivement la tension d'induit sur un variateur C.C., ou par injection d'un courant continu sur un variateur de fréquence.

Le procédé selon l'invention vise à contrôler un organe de freinage, tel que les freins de service ou d'urgence, les freins électromagnétique, une unité de freinage telle que définie ci-dessus et/ou un organe de mise en mouvement auxiliaire d'une installation de transport par câble, tel que le moteur de secours.

Le procédé de contrôle selon l'invention comprend une première phase préalable d'acquisition de données de référence ou phase d'élaboration d'un référentiel. Cette phase est réalisée lorsque l'installation est rodée mécaniquement. En outre, avant de procéder à l'acquisition des données, les organes de freinage et/ou de mise en mouvement auxiliaire sont réglés conformément aux normes et règlements en vigueur.

On notera que tous les essais réalisés par la suite seront déclenchés à partir d'une position donnée des véhicules sur la ligne et à partir d'un régime stabilisé de l'installation. Pour le contrôle d'un organe de freinage, le régime stabilisé correspond à un régime au cours duquel la vitesse des véhicules est constante. Pour contre, pour le contrôle d'un organe de mise en mouvement auxiliaire, le régime stabilisé correspond au régime d'arrêt de l'installation, c'est-à-dire au régime au cours duquel la vitesse des véhicules est nulle.

Lors de cette première phase, les caractéristiques mécaniques intrinsèques de l'installation, à savoir l'inertie et les forces de frottement liées aux caractéristiques inhérentes de l'installation, sont évaluées. Pour ce faire, on enregistre une courbe de vitesse Vo « inertie à vide » lorsque, à partir d'un régime stabilisé de l'installation, on débraye la poulie des moyens moteurs, pour l'installation fonctionnant à vide. La courbe de vitesse obtenue : Vo « inertie à vide », est représentative de la configuration de l'installation. Ainsi, par la suite, lors des tests périodiques de l'installation, on pourra vérifier que les caractéristiques intrinsèques de l'installation n'ont pas évolué et que, par conséquent, les données de référence restent valables.

De plus, on enregistre des données caractéristiques des moyens moteurs. En effet, comme les moyens moteurs seront utilisés par la suite pour délivrer un couple constant C, il est nécessaire de vérifier le bon fonctionnement des moyens moteurs, et par conséquent de disposer de données de référence concernant lesdits moyens moteurs.

Pour ce faire, à partir d'un régime stabilisé de l'installation fonctionnant à vide, on pratique un arrêt électrique, et on enregistre une courbe de vitesse Vo « arrêt électrique ». A cet effet, comme expliqué précédemment, pour l'arrêt électrique, on alimente les moyens moteurs avec un variateur commandé par un signal de commande visant à faire varier la vitesse du moteur jusqu'à l'arrêt.

Par ailleurs, la phase préalable d'acquisition des données de référence comprend une étape de détermination du couple C constant à délivrer par les moyens moteurs pour produire un effet entraînant ou résistant supérieur aux effets de l'inertie et/ou du couple résistant dus aux charges réelles.

Pour ce faire, on équipe l'installation de charges réelles correspondant aux charges requises dans les réglementations en vigueur. Ensuite, à partir d'un régime stabilisé, on active l'organe de freinage sur l'installation munie desdites charges réelles, les moyens moteurs étant arrêtés et on mesure le temps d'arrêt Ta de l'installation.

Avantageusement, on pourra prévoir d'effectuer deux expérimentations, en mesurant un temps d'arrêts Ta « charges entraînantes » lorsque les charges réelles ont pour effet d'entraîner l'installation et une temps d'arrêt Ta « charges résistantes » lorsque les charges réelles ont pour effet de freiner l'installation.

Par la suite, on décharge l'installation puis on détermine le couple C constant « charges entraînantes » qui doit être délivré par les moyens moteurs, lorsqu'on active l'organe sur l'installation à vide à partir d'un régime stabilisé, pour obtenir un temps d'arrêt Ta', qui soit supérieur à Ta « charges entraînantes », par exemple Ta'=1,2 x Ta.

De même, on détermine le couple C constant « charges résistantes » qui doit être délivré par les moyens moteurs, lorsqu'on active l'organe sur l'installation à vide à partir d'un régime stabilisé, pour obtenir un temps d'arrêt Ta', qui soit inférieur à Ta « charges résistantes ».

La détermination du couple C sera, par exemple, effectuée au moyen d'essais in situ empiriques.

Le couple C constant « charges entraînantes » ou « charge résistantes » délivré par les moyens moteurs produit un effet entraînant ou résistant supérieur aux effets de l'inertie et/ou du couple résistant dus aux charges réelles. Ainsi, dans ces conditions, si le fonctionnement de l'organe, observé lors de l'application d'un couple produisant des effets supérieurs aux charges réelles, est conforme, alors on peut a fortiori en déduire un fonctionnement correct de l'organe de freinage lorsque l'installation est munie de charges réelles.

Des essais sont effectués indépendamment avec des charges entraînantes et avec des charges résistantes pour chaque frein quel que soit le type de frein installé (frein(s) de service et frein(s) d'urgence). En outre, des essais sont réalisés à la fois lorsque la modulation de l'effort est suspendue et lorsque le frein est commandé par un dispositif de modulation de l'effort en fonction de la décélération de la ligne.

Pour chacun de ces essais, un couple C constant « charges résistantes » et un couple C constant « charges entraînantes » seront déterminés et on peut également prévoir d'enregistrer les courbes de vitesse V « charges entraînantes » et V « charges résistantes » pour chacun des essais.

Des types d'essais similaires sont également réalisés lors de l'activation du moteur auxiliaire de secours. Pour ce faire, à partir du régime stabilisé, correspondant au régime d'arrêt de l'installation, on active le moteur de secours auxiliaire sur l'installation munie des charges réelles, les moyens moteurs principaux étant arrêtés. Lors de ces essais, les charges réelles sont vidées au fur et à mesure de l'avancée des véhicules. On mesure la vitesse de l'installation à un instant t₁, par exemple en charge, et la vitesse de l'installation à un instant t₂, par exemple lorsque l'installation est à vide.

On peut également prévoir d'effectuer deux expérimentations, en mesurant la vitesse de l'installation en charge « charges entraînantes » lorsque les charges réelles ont pour effet d'entraîner l'installation et une vitesse « charges résistantes » lorsque les charges réelles ont pour effet de freiner l'installation.

Par la suite, on décharge l'installation puis on détermine un couple C₁ constant délivré par les moyens moteurs principaux pour obtenir la vitesse de l'installation mesurée précédemment à l'instant t₁, lorsqu'on active l'organe de mise en mouvement auxiliaire sur l'installation à vide, à partir d'un régime stabilisé et un couple C₂ constant délivré par les moyens moteurs principaux pour obtenir la vitesse de l'installation à l'instant t₂, lorsqu'on active l'organe de mise en mouvement auxiliaire sur l'installation à vide.

Lorsque les couples C « charges entraînantes » et « charge résistantes » ont été déterminés, on peut alors procéder à une série d'enregistrements de courbes de vitesse de référence. Pour ce faire, à partir d'un régime stabilisé de l'installation, on entraîne l'installation à vide par les moyens moteurs délivrant ledit couple C constant, on active simultanément l'organe et on enregistre une courbe de vitesse V ref.

Pour chaque organe de freinage, des essais sont effectués avec un couple C entraînant et avec un couple C résistant, en mode tout ou rien dans laquelle la modulation est suspendue et en mode modulation de la commande en fonction de la décélération.

Selon l'invention, on pourra également tester l'action conjointe du (des frein(s) de service et du (des) frein(s) de sécurité dans une configuration d'exploitation.

Avantageusement, pour les installations du type de celle décrite dans le document EP 1 884 432, des essais dans lesquels les deux organes de freinage sont commandés par des signaux de commande respectifs (double modulation de freins) sont réalisés

En outre, on peut également prévoir d'enregistrer pour chaque organe de freinage ou ensemble d'organes, et pour chaque mode de fonctionnement, plusieurs courbes de vitesse V ref correspondant à un réglage de l'organe pardéfaut, par excès et conformément aux normes en vigueur.

Lors des tests de l'organe de freinage, l'application d'un couple C « charges entraînantes » permet d'allonger artificiellement le freinage afin de tendre vers un temps compris entre le temps obtenu lors des essais en charge et un maximum réglementaire (le frein testé absorbe le maximum d'énergie). En outre, dans le cas d'un frein modulé, l'application d'un couple C « charges entraînantes » permet de forcer la décélération en deçà du seuil de modulation du frein. Ainsi, la modulation applique la totalité de l'effort disponible.

Dans le cas d'une double modulation de freins, la décélération est forcée en deçà du seuil de modulation du premier organe de freinage frein et la deuxième modulation, du second organe de freinage intervient alors pour appliquer l'effort manquant. Ainsi, le procédé selon l'invention permet de vérifier que le second organe de freinage est actionné lorsque l'effort de freinage fourni par le premier organe n'est pas suffisant et permet également de vérifier l'action conjointe des deux organes de freinage. Avantageusement, lors de ces essais, on enregistrera par ailleurs l'évolution de la pression dans les organes de freinage, afin de vérifier l'action conjointe des deux organes de freinage.

L'application d'un couple C « charges résistantes » permet de réduire artificiellement le temps de freinage vers un temps compris entre le temps obtenu lors des essais en charge et le minimum réglementaire. Dans le cas d'un frein modulé, la décélération est forcée au-delà du seuil de modulation du frein de sorte que la modulation applique le minimum de l'effort disponible ou n'applique pas d'effort.

Par ailleurs, on procède également à une série d'enregistrements de courbes de vitesse de référence, pour le contrôle du moteur auxiliaire. Pour ce faire, à partir du régime d'arrêt de l'installation, on entraîne l'installation à vide par les moyens moteurs délivrant, dans un premier temps le couple C₁ déterminé précédemment et, dans un second temps, le couple C₂, on active simultanément le moteur auxiliaire et on enregistre une courbe de vitesse V ref.

De même, on procède également à des mesures de la pression de glissement pour chaque frein en simulant un couple entraînant. Pour ce faire, à partir du régime d'arrêt de l'installation, on entraîne l'installation à vide par les moyens moteurs principaux délivrant un couple C constant, on fait varier la pression dans l'organe de freinage ; et on mesure la pression P ref dans l'organe de freinage lorsque l'installation dépasse une vitesse seuil V « seuil ».

Les organes de freinage ou de mise en mouvement de l'installation doivent être contrôlés selon une périodicité définie dans les normes réglementaires ou définies par le constructeur, généralement tous les ans. À cet effet, le procédé de contrôle selon l'invention comporte au moins une phase de test des organes de freinage ou de mise en mouvement auxiliaire qui est réalisé périodiquement afin de contrôler le fonctionnement des organes.

Dans un premier temps, on vérifie l'évolution des caractéristiques intrinsèques de l'installation. Pour ce faire, à partir du régime stabilisé de l'installation, on débraye la poulie des moyens moteurs de l'installation fonctionnant à vide et on enregistre une courbe de vitesse V1 « inertie à vide ». La courbe V1 « inertie à vide » est alors comparée à la courbe V0 « inertie à vide », enregistrée lors de l'élaboration du référentiel. Si les arrêts par inertie à vide sont similaires, on peut en conclure que les données acquises lors de l'élaboration du référentiel restent valables.

En outre, on vérifie également l'évolution des données caractéristiques des moyens moteurs, et notamment de leur(s) variateur de vitesse. Pour ce faire, à partir d'un régime stabilisé de l'installation fonctionnant à vide, on pratique un arrêt électrique conforme à l'arrêt électrique réalisé précédemment et on enregistre une courbe de vitesse V1 « arrêt électrique. Pour ce faire, on alimente les moyens moteurs avec un variateur commandé par un signal de commande visant à faire varier la vitesse du moteur jusqu'à l'arrêt.

Enfin, pour tous les organes de freinage ou de mise en mouvement auxiliaire et pour toutes les configurations pour lesquelles une courbe de vitesse V ref a été établie (charges entraînantes, charges résistantes, mode tout ou rien, frein modulé, configuration d'exploitation, etc), on enregistre une courbe de vitesse V test. Cette courbe est enregistrée lorsque, à partir d'un régime stabilisé de l'installation à vide, on entraîne l'installation par les moyens moteurs délivrant le couple C constant déterminé précédemment et on active simultanément l'organe.

La courbe de vitesse V test est alors comparée avec la ou les courbes de référence V ref correspondant à un réglage de l'organe par défaut, réglé ou en excès. Si aucun écart n'est observé entre les courbes V test et V ref, on peut alors en déduire que l'organe est correctement réglé. Au contraire, si la courbe V test obtenue dépasse les bornes fixées par les courbes V ref « par défaut » et V ref « en excès », on en déduit que l'organe doit être réglé de nouveau.

Bien évidemment, la phase de test de l'organe de mise en mouvement auxiliaire, comprend deux séquences, les moyens moteurs délivrant, lors de la première séquence le couple C₁ déterminé et, lors de la seconde séquence le couple C₂.

Afin de s'assurer de la précision des enregistrements réalisés, on veillera à déclencher l'organe à partir d'une position donnée des véhicules sur la ligne et à partir d'un régime stabilisé de l'installation.
En outre, lors de ces étapes de test, on pourra procéder à l'enregistrement de courbes de pression qui seront comparés à des courbes de pression enregistrées lors de la phase préalable d'acquisition des données.

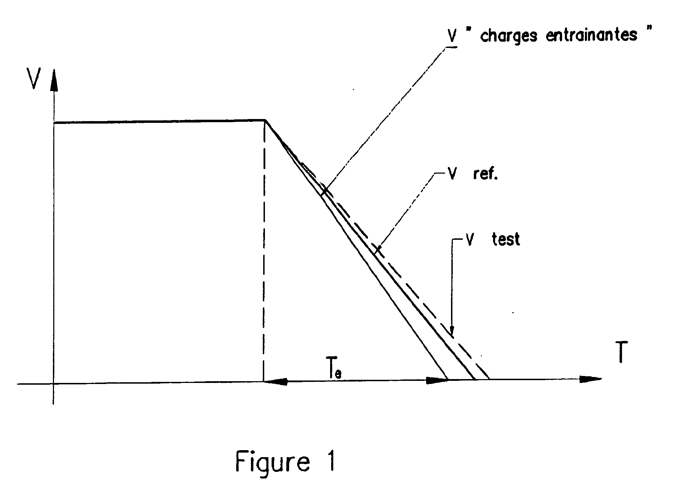

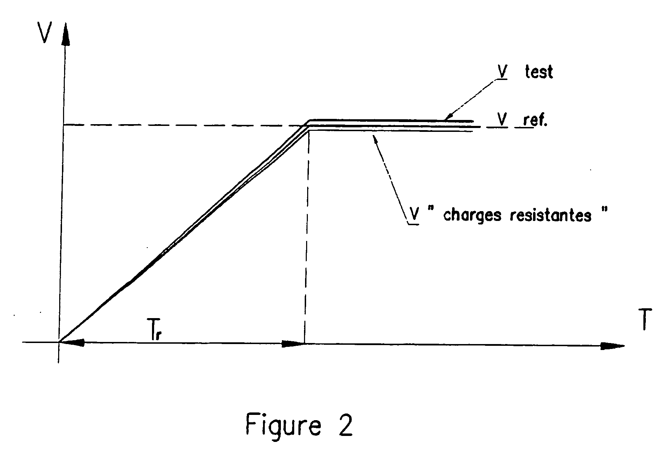

Les figures 1 et 2 illustrent, à titre d'exemple, des courbes enregistrées lors des tests de l'installation en charge : V « charges résistantes » et V « charges entraînantes », lors de l'élaboration du référentiel V ref et lors de la phase de test de l'organe V test. La figure 1 représente des courbes pour le contrôle d'un organe de freinage alors que la figure 2 représente des courbes pour le contrôle d'un organe de mise en mouvement auxiliaire tel que le moteur de sécurité.

Afin de mettre en oeuvre le procédé décrit ci-dessus, un logiciel peut être chargé dans l'automate de commande de l'installation de transport par câble.

Ce logiciel permet notamment la gestion de l'enregistrement et de l'affichage des courbes de vitesse, la commande des moyens moteurs pour délivrer le couple C constant, la commande des organes de freinage ou des organes de mise en mouvement auxiliaire, la gestion de la synchronisation des essais, l'enregistrement et l'affichage des courbes de pression des organes de freinage, etc. En outre, le logiciel permet un stockage des informations acquises lors des opérations de contrôle.

## Revendications

1. Procédé de contrôle d'au moins un organe de freinage ou de mise en mouvement auxiliaire d'une installation de transport par câble entraînant au moins un véhicule, le câble étant entraîné par une poulie coopérant avec des moyens moteurs principaux, **caractérisé en ce que** le procédé de contrôle comporte au moins une phase de test dudit organe lors de laquelle, à partir d'un régime stabilisé de l'installation :
- on entraîne l'installation à vide par les moyens moteurs principaux délivrant un couple C constant ;
- on active simultanément l'organe de freinage ou de mise en mouvement ; et
- on enregistre une courbe de vitesse V test.

2. Procédé de contrôle selon la revendication 1, **caractérisé en ce qu'**il comprend une phase préalable d'acquisition de données de référence, lors de laquelle :
- on règle l'organe ;
- à partir du régime stabilisé, on entraîne l'installation à vide par les moyens moteurs délivrant ledit couple C constant ;
- on active simultanément l'organe de freinage ou de mise en mouvement ;
- on enregistre au moins une courbe de vitesse V ref ;
la phase de test comprenant une étape de comparaison des courbes de vitesse V test et V ref.

3. Procédé de contrôle selon la revendication 2, **caractérisé en ce que** la phase préalable d'acquisition de données de référence comprend une étape de détermination du couple C, lors de laquelle :
- à partir du régime stabilisé, on active un organe de freinage sur l'installation munie de charges réelles entraînantes ou résistantes, les moyens moteurs étant arrêtés ;
- on mesure le temps d'arrêt Ta de l'installation ;
- on détermine le couple C constant délivré par les moyens moteurs principaux pour obtenir un temps d'arrêt Ta' , lorsqu'on active l'organe sur l'installation à vide à partir d'un régime stabilisé, qui soit supérieur à Ta lorsque les charges réelles sont entraînantes et qui soit inférieure à Ta lorsque les charges sont résistantes.

4. Procédé de contrôle selon la revendication 2 ou 3, **caractérisé en ce que** la phase préalable d'acquisition de données de référence comprend une étape de détermination du couple C, lors de laquelle :
- à partir du régime stabilisé, on active l'organe de mise en mouvement auxiliaire sur l'installation munie de charges réelles entraînantes ou résistantes, les moyens moteurs principaux étant arrêtés la ligne étant vidée au fur et à mesure de l'avancé des véhicules ;
- on mesure la vitesse de l'installation à un instant t₁ et la vitesse de l'installation à un instant t₂ ;
- on détermine le couple C₁ constant délivré par les moyens moteurs principaux pour obtenir la vitesse de l'installation à l'instant t₁ lorsqu'on active l'organe de mise en mouvement auxiliaire sur l'installation à vide, à partir d'un régime stabilisé;
- on détermine le couple C₂ constant délivré par les moyens moteurs principaux pour obtenir la vitesse de l'installation à l'instant t₂, lorsqu'on active l'organe de mise en mouvement auxiliaire sur l'installation à vide, à partir d'un régime stabilisé.

5. Procédé de contrôle selon la revendication 4, **caractérisé en ce que** la phase de test de l'organe de mise en mouvement auxiliaire comprend au moins deux séquences lors desquelles les moyens moteurs principaux délivrent respectivement un couple C₁ constant puis un couple C₂ constant.

6. Procédé de contrôle selon l'une des revendications 2 à 5, **caractérisé en ce qu'**il comprend une opération de vérification de l'évolution des caractéristiques intrinsèques de l'installation comprenant :
- lors de phase préalable d'acquisition de données de référence, une étape d'enregistrement d'une courbe de vitesse Vo « inertie à vide » lors de laquelle, à partir d'un régime stabilisé, on débraye la poulie des moyens moteurs de l'installation fonctionnant à vide ; et
- lors de la phase de test, une étape d'enregistrement d'une courbe de vitesse V1 « inertie à vide », lors de laquelle, à partir du régime stabilisé, on débraye la poulie des moyens moteurs de l'installation fonctionnant à vide ; et une opération de comparaison des courbes Vo « inertie à vide » et V1 « inertie à vide ».

7. Procédé de contrôle selon l'une des revendications 2 à 6, **caractérisé en ce qu'**il comprend une étape de vérification des caractéristiques des moyens moteurs comprenant:
- lors de phase préalable d'acquisition de données de référence, une opération d'enregistrement d'une courbe de vitesse Vo « arrêt électrique , lors de laquelle, à partir d'un régime stabilisé de l'installation fonctionnant à vide, on alimente les moyens moteurs avec un variateur commandé par un signal de commande visant à faire varier la vitesse du moteur jusqu'à l'arrêt ; et
- lors de la phase de test, une opération d'enregistrement d'une courbe de vitesse V1 « arrêt électrique », lors de laquelle, à partir du régime stabilisé de l'installation fonctionnant à vide, on alimente les moyens moteurs avec un variateur commandé par le signal de commande visant à faire varier la vitesse du moteur jusqu'à l'arrêt ; et une opération de comparaison des courbes Vo « arrêt électrique » et V1 « arrêt électrique».

8. Procédé de contrôle selon l'une des revendications 2 à 7, **caractérisé en ce que** pendant la phase préalable d'acquisition de données de référence, on enregistre plusieurs courbes de vitesse V ref correspondant à un réglage de l'organe par défaut, par excès et conformément aux normes en vigueur.

9. Procédé de contrôle selon l'une des revendications 1 à 8, **caractérisé en ce qu'**il comprend une phase de test lors de laquelle les moyens moteurs délivre un couple C résistant et une phase de test lors de laquelle les moyens moteurs délivre un couple C entrainant.

10. Procédé de contrôle selon l'une des revendications 1 à 9, **caractérisé en ce qu'**on contrôle un organe de freinage commandé par une modulation de l'effort en fonction de la décélération de la ligne ; ledit procédé comprenant une première phase de test lors de laquelle la modulation est suspendue et une seconde phase de test lors de laquelle l'organe de freinage est commandé par une modulation de l'effort.

11. Procédé de contrôle selon l'une des revendications 1 à 10, **caractérisé en ce qu'**il comprend en outre une phase de contrôle de la pression de glissement d'un organe de freinage comprenant :
- à partir du régime d'arrêt de l'installation, on entraîne l'installation à vide par les moyens moteurs principaux délivrant un couple C constant ;
- on fait varier la pression dans l'organe de freinage ; et
- on mesure la pression P test dans l'organe de freinage lorsque l'installation dépasse une vitesse seuil V « seuil ».

12. Procédé de contrôle selon la revendication 11, **caractérisé en ce que** lors de la phase préalable d'acquisition de données de référence :
- à partir du régime d'arrêt de l'installation, on entraîne l'installation à vide par les moyens moteurs principaux délivrant un couple C constant ;
- on fait varier la pression dans l'organe de freinage ; et
- on mesure la pression P ref dans l'organe de freinage lorsque l'installation dépasse une vitesse seuil V « seuil ».
- la phase de test comprenant une étape de comparaison des pressions P ref et P test.

13. Procédé de contrôle selon l'une des revendications 2 à 12, **caractérisé en ce que** lors des phases de test et d'acquisition de données de référence, on synchronise la position des véhicules entraînés par le câble lorsque l'on déclenche l'activation de l'organe.

14. Procédé de contrôle selon l'une des revendications 1 à 13, **caractérisé en ce qu'**on synchronise la position des véhicules entraînés au moyen d'un avertisseur sonore de passage des véhicules.

15. Logiciel directement chargeable dans la mémoire d'un automate pour commander les étapes de l'un des revendications 1 à 14 lorsque ledit logiciel est exécuté.

## Claims

1. Method of controlling at least one member for braking or auxiliary starting of a cable transport installation driving at least one vehicle, the cable being driven by a pulley cooperating with main motor means, **characterised in that** the method of controlling comprises at least one test phase of said member during which, from a stabilised state of the installation:
- the installation is driven off-load by the main motor means delivering a constant torque C;
- the braking or starting member is activated simultaneously; and
- a speed curve V test is registered.

2. Method of controlling according to claim 1, **characterised in that** it comprises a prior phase of acquiring reference data, during which:
- the member is adjusted;
- from the stabilised state, the installation is driven off-load by the motor means delivering said constant torque C;
- the braking or starting member is activated simultaneously;
- at least one speed curve V ref is registered; the test phase comprising a step of comparing the speed curves V test and V ref.

3. Method of controlling according to claim 2, **characterised in that** the prior phase of acquiring reference data comprises a step of determining the torque C, during which:
- from the stabilised state, a braking member is activated on the installation provided with real driving or resisting loads, the motor means being stopped;
- the stop time Ta of the installation is measured;
- the constant torque C delivered by the main motor means is determined in order to obtain a stop time Ta', when the member on the installation is activated off-load from a stabilised state, which is greater than Ta when the real loads are driving and less than Ta when the loads are resisting.

4. Method of controlling according to claim 2 or 3, **characterised in that** the prior phase of acquiring reference data comprises a step of determining the torque C, during which:
- from the stabilised state, the auxiliary starting member is activated on the installation provided with real driving or resisting loads, the main motor means being stopped, the line being emptied as the vehicles advance;
- the speed of the installation is measured at a time t₁ and the speed of the installation at a time t₂;
- the constant torque C₁ delivered by the main motor means is determined in order to obtain the speed of the installation at time t₁, when the auxiliary starting member is activated on the installation when off-load, from a stabilised state;
- the constant torque C₂ delivered by the main motor means is determined in order to obtain the speed of the installation at time t₂, when the auxiliary starting member is activated on the installation when off-load, from a stabilised state.

5. Method of controlling according to claim 4, **characterised in that** the test phase of the auxiliary starting member comprises at least two sequences during which the main motor means deliver respectively a constant torque C₁ and then a constant torque C₂.

6. Method of controlling according to one of claims 2 to 5, **characterised in that** it comprises an operation of checking the change in the intrinsic characteristics of the installation, comprising:
- during the prior phase of acquiring reference data, a step of registering an "inertia when off-load" speed curve Vo during which, from a stabilised state, the pulley of the motor means of the installation functioning off-load is disengaged; and
- during the test phase, a step of registering an "inertia off-load" speed curve V1, during which, from the stabilised state, the pulley of the motor means of the installation functioning off-load is disengaged; and an operation of comparing the curves "inertia off-load" Vo and "inertia off-load" V1.

7. Method of controlling according to one of claims 2 to 6, **characterised in that** it comprises a step of checking the characteristics of the motor means, comprising:
- during a prior phase of acquiring reference data, an operation of registering an "electrical stop" speed curve Vo during which, from a stabilised state of the installation functioning off-load, the motor means are supplied by a variator controlled by a control signal aimed at varying the speed of the motor until stoppage; and
- during the test phase, an operation of registering an "electrical stop" speed curve V1 during which, from the stabilised state of the installation functioning off-load, the motor means are supplied by a variator controlled by the control signal aimed at varying the speed of the motor until stoppage; and an operation of comparing the "electrical stop" Vo and "electrical stop" V1 curves.

8. Method of controlling according to one of claims 2 to 7, **characterised in that**, during the prior phase of acquiring reference data, several speed curves V ref corresponding to an adjustment of the member by default, by excess and in accordance with current standards, are registered.

9. Method of controlling according to one of claims 1 to 8, **characterised in that** it comprises a test phase during which the motor means deliver a resisting torque C and a test phase during which the motor means deliver a driving torque C.

10. Method of controlling according to one of claims 1 to 9, **characterised in that** a braking member controlled by a modulation of the force according to the deceleration of the line is actuated; said method comprising a first test phase during which the modulation is suspended and a second test phase during which the braking member is controlled by a modulation of the force.

11. Method of controlling according to one of claims 1 to 10, **characterised in that** it also comprises a phase of controlling the sliding pressure of a braking member comprising:
- from the stop state of the installation, the installation is driven off-load by the main motor means delivering a constant torque C;
- the pressure is varied in the braking member; and
- the test pressure P is measured in the braking member when the installation exceeds a threshold speed V "threshold".

12. Method of controlling according to claim 11, **characterised in that**, during the prior phase of acquiring reference data:
- from the stop state of the installation, the installation is driven off-load by the main motor means delivering a constant torque C;
- the pressure is varied in the braking member; and
- the pressure P ref is measured in the braking member when the installation exceeds a threshold speed V "threshold".
- the test phase comprising a step of comparing the pressures P ref and P test.

13. Method of controlling according to one of claims 2 to 12, **characterised in that**, during the test and reference data acquisition phases, the position of the vehicles driven by the cable is synchronised when the activation of the member is triggered.

14. Method of controlling according to one of claims 1 to 13, **characterised in that** the position of the vehicles driven is synchronised by means of an audible vehicle passage warning.

15. Software directly loadable into the memory of an automatic controller in order to control the steps of one of claims 1 to 14 when said software is executed.

## Patentansprüche

1. Verfahren zur Steuerung von mindestens einem zusätzlichen Brems- oder Antriebsorgans einer Seilbahnanlage, die mindestens ein Fahrzeug antreibt, wobei das Seil durch eine Rolle angetrieben wird, die mit den Hauptmotoren zusammenarbeitet, **dadurch gekennzeichnet, dass** das Steuerungsverfahren mindestens einen Prüfschritt des besagten Organs enthält, während dessen ausgehend von einem stabilisierten Betriebszustand der Anlage:
- die Anlage im Leerlauf durch die Hauptmotoren betrieben wird, die ein konstantes Drehmoment C liefern;
- das Brems- oder Antriebsorgan gleichzeitig aktiviert wird; und
- eine Geschwindigkeitskurve V test aufgezeichnet wird.

2. Verfahren zur Steuerung nach Anspruch 1, **dadurch gekennzeichnet, dass** es einen vorangehenden Schritt zur Erfassung von Referenzdaten umfasst, im Laufe dessen :
- das Organ eingestellt wird;
- ausgehend von einem stabilisierten Betriebszustand die Anlage im Leerlauf durch die Motoren betrieben wird, die das konstante Drehmoment C liefern;
- das Brems- oder Antriebsorgan gleichzeitig aktiviert wird;
- mindestens eine Geschwindigkeitskurve V ref aufgezeichnet wird;
wobei der Prüfschritt einen Schritt zum Vergleich der Geschwindigkeitskurven V test und V ref umfasst.

3. Verfahren zur Steuerung nach Anspruch 2, **dadurch gekennzeichnet, dass** der vorangehende Schritt zur Erfassung von Referenzdaten einen Schritt zur Bestimmung des Drehmoments C umfasst, während dessen:
- ausgehend von einem stabilisierten Betriebszustand ein Bremsorgan an der Anlage aktiviert wird, welche mit tatsächlichen Antriebs- oder Widerstandslasten versehen ist, wobei die Motoren abgestellt sind;
- die Haltezeit Ta der Anlage gemessen wird;
- das konstante Drehmoment C, das von den Hauptmotoren geliefert wird, bestimmt wird, um eine Haltezeit Ta' zu erhalten, die, wenn das Organ in der Anlage im Leerlauf ausgehend von einem stabilisierten Betriebszustand aktiviert wird, größer als Ta ist, wenn die tatsächlichen Lasten Antriebslasten sind und kleiner als Ta ist, wenn die Lasten Widerstandslasten sind.

4. Verfahren zur Steuerung nach Anspruch 2 oder 3, **dadurch gekennzeichnet, dass** der vorangehende Schritt zur Erfassung von Referenzdaten einen Schritt zur Bestimmung des Drehmoments C umfasst, während dessen:
- ausgehend von einem stabilisierten Betriebszustand das zusätzliche Antriebsorgan in der Anlage aktiviert wird, welche mit tatsächlichen Antriebs- oder Widerstandslasten versehen ist, wobei die Hauptmotoren abgestellt sind und die Linie nach und nach beim Ankommen der Fahrzeuge geleert wird;
- die Geschwindigkeit der Anlage an einem Zeitpunkt t₁ und die Geschwindigkeit der Anlage an einem Zeitpunkt t₂ gemessen werden;
- das von den Hauptmotoren gelieferte konstante Drehmoment C₁, bestimmt wird, um die Geschwindigkeit der Anlage an einem Zeitpunkt t1 zu erhalten, wenn das zusätzliche Antriebsorgan an der Installation im Leerlauf ausgehend von einem stabilisierten Betriebszustand aktiviert wird;
- das von den Hauptmotoren gelieferte konstante Drehmoment C₂, bestimmt wird, um, um die Geschwindigkeit der Anlage an einem Zeitpunkt t₂ zu erhalten, wenn das zusätzliche Antriebsorgan an der Installation im Leerlauf ausgehend von einem stabilisierten Betriebszustand aktiviert wird.

5. Verfahren zur Steuerung nach Anspruch 4, **dadurch gekennzeichnet, dass** der Prüfschritt des zusätzlichen Antriebsorgans mindestens zwei Sequenzen umfasst, während derer die Hauptmotoren jeweils ein konstantes Drehmoment C₁ und dann ein konstantes Drehmoment C₂ liefern.

6. Verfahren zur Steuerung nach einem beliebigen der Ansprüche 2 bis 5, **dadurch gekennzeichnet, dass** es einen Schritt zur Überprüfung der Entwicklung der inhärenten Kennwerte der Anlage umfasst, welche umfassen:
- während des vorangehenden Schritts zur Erfassung von Referenzdaten ein Schritt des Aufzeichnens einer Geschwindigkeitskurve "Trägheit im Leerlauf" Vo, während derer ausgehend von einem stabilisierten Betriebszustand, die Rollen der Motoren der im Leerlauf betriebenen Anlage ausgekuppelt werden; und
- während des Prüfschritts ein Schritt des Aufzeichnens einer Geschwindigkeitskurve "Trägheit im Leerlauf" V1, während derer ausgehend von einem stabilisierten Betriebszustand, die Rollen der Motoren der im Leerlauf betriebenen Anlage ausgekuppelt werden; und einen Arbeitsschritt zum Vergleich der Kurven "Trägheit im Leerlauf" Vo und "Trägheit im Leerlauf" V1.

7. Verfahren zur Steuerung nach einem beliebigen der Ansprüche 2 bis 6, **dadurch gekennzeichnet, dass** es einen Prüfschritt der Kenndaten der Motoren umfasst, welche umfassen :
- während des vorangehenden Schritts zur Erfassung von Referenzdaten ein Schritt des Aufzeichnens einer Geschwindigkeitskurve "elektrischer Stopp" Vo, während derer ausgehend von einem stabilisierten Betriebszustand der Anlage im Leerlauf, die Motoren von einem stufenlosen Getriebe gespeist werden, das von einem Steuersignal gesteuert wird, mit dem Ziel, die Geschwindigkeit des Motors bis zum Stillstand zu variieren; und
- während des Prüfschritts ein Schritt des Aufzeichnens einer - Geschwindigkeitskurve "elektrischer Stopp" V1, während derer ausgehend von einem stabilisierten Betriebszustand der Anlage im Leerlauf, die Motoren von einem stufenlosen Getriebe gespeist werden, das von einem Steuersignal gesteuert wird, mit dem Ziel, die Geschwindigkeit des Motors bis zum Stillstand zu variieren; und einen Arbeitsschritt zum Vergleich der Kurven "elektrischer Stopp" Vo und "elektrischer Stopp" V1.

8. Verfahren zur Steuerung nach einem beliebigen der Ansprüche 2 bis 7, **dadurch gekennzeichnet, dass** während des vorangehenden Schritts zur Erfassung von Referenzdaten mehrere Geschwindigkeitskurven V ref aufgezeichnet werden, die der Einstellung des Organs als Standard, bei Überschuss oder nach geltenden Normen entsprechenen.

9. Verfahren zur Steuerung nach einem beliebigen der Ansprüche 1 bis 8, **dadurch gekennzeichnet, dass** es einen Prüfschritt umfasst, während dessen die Motoren ein Widerstandsmoment C liefern und einen Prüfschritt, während dessen die Motoren ein Antriebsmoment C liefern.

10. Verfahren zur Steuerung nach einem beliebigen der Ansprüche 1 bis 9, **dadurch gekennzeichnet, dass** ein Bremsorgan durch die Modulation der Kräfte in Abhängigkeit von der Bremsung der Linie gesteuert wird; wobei das Verfahren einen ersten Prüfschritt umfasst, während dessen die Modulation ausgesetzt ist und einen zweiten Prüfschritt, während dessen das Bremsorgan durch eine Modulation der Kräfte gesteuert wird.

11. Verfahren zur Steuerung nach einem beliebigen der Ansprüche 1 bis 10, **dadurch gekennzeichnet, dass** es ferner einen Schritt der Überwachung des Gleitdrucks eines Bremsorgans umfasst, welcher Folgendes umfasst:
- ausgehend vom Stillstandszustand der Anlage wird die Anlage im Leerlauf durch die Hauptmotoren betrieben, die ein konstantes Drehmoment C liefern;
- der Druck im Bremsorgan variiert wird; und
- der Prüfdruck P im Bremsorgan gemessen wird, wenn die Anlage eine Grenzgeschwindigkeit V "Grenze" überschreitet.

12. Verfahren zur Steuerung nach Anspruch 11, **dadurch gekennzeichnet, dass** während des vorangehenden Schritts zur Erfassung von Referenzdaten:
- ausgehend vom Stillstandszustand der Anlage die Anlage im Leerlauf von den Hauptmotoren betrieben wird, die ein konstantes Drehmoment C liefern;
- der Druck im Bremsorgan variiert wird; und
- der Prüfdruck P ref im Bremsorgan gemessen wird, wenn die Anlage eine Grenzgeschwindigkeit V "Grenze" überschreitet;
- der Prüfschritt einen Vergleichsschritt der Drücke P ref und P test umfasst.

13. Verfahren zur Steuerung nach einem beliebigen der Ansprüche 2 bis 12, **dadurch gekennzeichnet, dass** während der Schritte der Prüfung und zur Erfassung von Referenzdaten, die Lage der durch das Seil angetriebenen Fahrzeuge synchronisiert wird, wenn die Aktivierung des Organs ausgelöst wird.

14. Verfahren zur Steuerung nach einem beliebigen der Ansprüche 1 bis 13, **dadurch gekennzeichnet, dass** die Lage der angetriebenen Fahrzeuge durch ein akustisches Warnsignal der Durchfahrt der Fahrzeuge synchronisiert wird.

15. Software, die direkt in den Speicher eines Automaten geladen werden kann, um die Schritte eines beliebigen der Patenansprüche 1 bis 14 zu steuern, wenn besagtes Programm ausgeführt wird.
